# EUROPÄISCHE PATENTSCHRIFT

(11) **EP 2 403 756 B1**
(45) Veröffentlichungstag und Bekanntmachung des Hinweises auf die Patenterteilung: **15.06.2016**
(21) Anmeldenummer: 10708120.0
(22) Anmeldetag: 03.03.2010
(51) Int. Cl.: B64C 1/00, B64C 1/18

(54) **DEKOMPRESSIONSANORDNUNG FÜR EIN LUFTFAHRZEUG**
DECOMPRESSION ASSEMBLY FOR AN AIRCRAFT
DISPOSITIF DE DÉCOMPRESSION POUR UN AÉRONEF

(30) Priorität: 06.03.2009 DE 102009012015; 06.03.2009 US 209476 P
(43) Veröffentlichungstag der Anmeldung: 11.01.2012
(73) Patentinhaber: Airbus Operations GmbH, 21129 Hamburg (DE)
(72) Erfinder: VOSS, Jens, 21698 Harsefeld (DE); DOEMELAND, Patrique, 22339 Hamburg (DE); ROTH, Ingo, 22547 Hamburg (DE)
(74) Vertreter: Schicker, Silvia
(86) Internationale Anmeldenummer: PCT/EP2010/001320
(87) Internationale Veröffentlichungsnummer: WO 2010/099952

(56) Entgegenhaltungen:
- WO-A1-2007/073787
- US-A- 4 432 514
- US-B1- 6 264 141

## Beschreibung

Die Erfindung betrifft eine zum Einsatz in einem Luftfahrzeug, beispielsweise einem Passagierflugzeug, vorgesehene Dekompressionsanordnung.

Gegenwärtig eingesetzte Passagierflugzeuge umfassen eine Druckkabine, deren Innendruck im Flugbetrieb beispielsweise durch eine mit Triebwerkszapfluft gespeiste Klimaanlage auf einem gegenüber dem Umgebungsdruck, d.h. dem in großen Höhen verringerten Atmosphärendruck, erhöhten Druckniveau gehalten wird. Im Allgemeinen entspricht der Druck im Inneren der Kabine eines Passagierflugzeugs im Flugbetrieb des Flugzeugs, d.h. wenn sich das Flugzeug auf Reiseflughöhe befindet, üblicherweise etwa dem Atmosphärendruck in einer Höhe von 8000 Fuß (ca. 2400 m). Die von der Flugzeugklimaanlage bereitgestellte Klimatisierungsluft wird üblicherweise durch Lufteinlasskanäle in die Kabine zugeführt, die oberhalb der Passagiersitze im Bereich von Deckenverkleidungspaneelen und/oder Seitenverkleidungspaneelen der Kabinenverkleidung in die Kabine münden. Die Abfuhr von Abluft aus der Kabine erfolgt in Regel durch Luftauslasskanäle, die im Bereich eines Kabinenbodens oder eines bodennahen Abschnitts der Seitenverkleidungspaneele angeordnet sind. Um im Fall einer Dekompression, d.h. im Fall eines Druckabfalls in einem Bereich der während des Flugs unter erhöhtem Druck gehaltenen Flugzeugkabine eine Beschädigung der Kabinenverkleidung, insbesondere der Seitenverkleidungspaneele, zu vermeiden, muss im Dekompressionsfall ein Druckausgleich zwischen dem von der Dekompression betroffenen Bereich der Flugzeugkabine und einem von den Paneelen, insbesondere den Seitenverkleidungspaneelen der Kabinenverkleidung sowie der Flugzeugaußenhaut begrenzten Bereich möglich sein.

Beispielsweise kann ein Luftauslasskanal, der im Normalbetrieb des Flugzeugs dazu dient, Abluft aus der Kabine in den von den Paneelen der Kabinenverkleidung sowie der Flugzeugaußenhaut begrenzten Bereich und anschließend beispielsweise in einen Unterflurbereich des Flugzeugs abzuführen, im Dekompressionsfall für einen Druckausgleich zwischen dem von der Dekompression betroffenen Bereich der Flugzeugkabine und dem von den Paneelen der Kabinenverkleidung sowie der Flugzeugaußenhaut begrenzten Bereich sorgen. Da der Luftauslasskanal dann jedoch nicht nur hinsichtlich seiner Funktion als Abluftabfuhrkanal im Normalbetrieb des Flugzeugs optimiert werden kann, sondern so ausgelegt werden muss, dass er im Dekompressionsfall einen ausreichend raschen Druckausgleich zwischen dem von der Dekompression betroffenen Bereich der Flugzeugkabine und dem von den Paneelen der Kabinenverkleidung sowie der Flugzeugaußenhaut begrenzten Bereich ermöglicht, weist ein Luftauslasskanal, der sowohl als Abluftabfuhrkanal als auch als Druckausgleichskanal dient, üblicherweise vergleichsweise schlechte akustische Eigenschaften auf. Dies kann zu einer Beeinträchtigung des Komforts der Passagiere in der Flugzeugkabine führen.

Alternativ dazu können Flugzeugkabinenverkleidungspaneele, wie in der nicht vorveröffentlichten DE 10 2007 061 433 beschrieben, mit einem Gitterversehen sein, durch das im Normalbetrieb des Flugzeugs Abluft aus der Kabine in einen Rezirkulationsluftkanal einer Flugzeugklimaanlage geleitet wird. In einem durch das Gitter von der Kabine getrennten Bereich des Flugzeugs ist ein Dekompressionselement mit einer Klappe angeordnet, die im Dekompressionsfall eine Druckausgleichsöffnung zwischen der Kabine und einem von Kabinenverkleiduhgspaneelen sowie einer Flugzeugaußehhaut begrenzten Bereich freigibt.

Die US 4,432,514 stellt den nächstliegenden Stand der Technik dar. Sie offenbart den Oberbegriff des Anspruchs 1.

Schließlich ist es bekannt, Flugzeugkabinenverkleidungspaneele, wie z.B. Dado-Paneele, mit einem integrierten Klappenmechanismus auszustatten, der im Dekompressionsfall eine Druckausgleichsöffnung zwischen einem von der Dekompression betroffenen Bereich der Flugzeugkabine und einem von den Paneelen der Kabinenverkleidung sowie der Flugzeugaußenhaut begrenzten Bereich freigibt.

Diese derzeit gebräuchlichen Anordnungen haben jedoch den Nachteil, dass sie häufig Missbrauchslasten, wie z.B. Fußtritten oder dergleichen ausgesetzt sind und daher verhältnismäßig robust gestaltet sein müssen. Dies führt zu unerwünschtem Mehrgewicht sowie zu einem vergrößertem Bauvolumen der Verkleidungspaneele. Der erhöhte Einbauraumbedarf der Paneele resultiert in einer Verringerung der Kabinenbreite und wirkt sich somit unmittelbar nachteilig auf den Komfort der Passagiere in der Flugzeugkabine aus. Schließlich weisen mit einer Druckausgleichsklappe ausgestattete Verkleidungspaneele einen vergleichsweise komplizierten und damit fehleranfälligen und wartungsintensiven Aufbau auf.

Die Erfindung ist auf die Aufgabe gerichtet, eine einfach aufgebaute, leichtgewichtige Dekompressionsanordnung für ein Luftfahrzeug bereitzustellen, die bei einem Druckabfall in einem Bereich einer während des Flugs unter erhöhtem Druck gehaltenen Flugzeugkabine für einen ordnungsgemäßen Druckausgleich zwischen dem von der Dekompression betroffenen Bereich der Flugzeugkabine und einem von den Paneelen der Kabinenverkleidung sowie der Flugzeugaußenhaut begrenzten Bereich sorgt.

Zur Lösung dieser Aufgabe umfasst eine erfindungsgemäße Dekompressionsanordnung für ein Luftfahrzeug ein erstes Kabinenverkleidungselement mit einem Randbereich sowie ein zweites Kabinenverkleidungselement mit einem Randbereich. Der Randbereich des zweiten Kabinenverkleidungselements ist in einem geringeren Abstand von einer Luftfahrzeugaußenhaut angeordnet als der Randbereich des ersten Kabinenverkleidungselements. Zwischen dem Randbereich des ersten Kabinenverkleidungselements und dem Randbereich des zweiten Kabinenverkleidungselements ist eine Luftabfuhröffnung angeordnet, durch die im Normalbertrieb des Luftfahrzeugs Luft aus einer Kabine des Luftfahrzeugs in einen zwischen den Kabinenverkleidungselementen und der Luftfahrzeugaußenhaut liegenden Bereich des Luftfahrzeugs abgeführt wird. Das erste Kabinenverkleidungselement kann beispielsweise ein Seitenverkleidungspaneel, insbesondere ein Dado-Paneel sein, dessen Randbereich einem Boden der Luftfahrzeugkabine zugewandt ist und sich entlang einer Längsachse des Luftfahrzeugs in einem im wesentlichen gleichbleibenden Abstand von dem Boden der Luftfahrzeugkabine erstreckt. Das zweite Kabinenverkleidungselement kann beispielsweise ein Bodenbegrenzungselement sein, das sich vom Boden der Luftfahrzeugkabine nach oben in Richtung des Dado-Paneels erstreckt.

Der dem ersten Kabinenverkleidungselement zugewandte Randbereich des zweiten Kabinenverkleidungselements kann sich entlang der Längsachse des Luftfahrzeugs im wesentlichen parallel zum Boden der Luftfahrzeugkabine erstrecken und/oder mit dem Randbereich des ersten Kabinenverkleidungselements in einer Ebene angeordnet sein. Alternativ dazu können das erste und das zweite Kabinenverkleidungselement jedoch auch so geformt und/oder angeordnet sein, dass das zweite Kabinenverkleidungselement das erste Kabinenverkleidungselement hintergreift, d.h. der Randbereich des zweiten Kabinenverkleidungselements, betrachtet aus einem Innenraum der Luftfahrzeugkabine, hinter dem ersten Kabinenverkleidungselement positioniert ist. Schließlich ist auch eine Anordnung denkbar, in der der Randbereich des zweiten Kabinenverkleidungselements unterhalb des Randbereichs des ersten Kabinenverkleidungselements angeordnet ist, d.h. auch in einer Richtung im Wesentlichen parallel zur Luftfahrzeugaußenhaut von dem Randbereich des ersten Kabinenverkleidungselements beabstandet ist.

Die zwischen den Randbereichen des ersten und des zweiten Kabinenverkleidungselements angeordnete Luftabfuhröffnung kann eine Strömungsquerschnittsfläche aufweisen, die einer gesamten durch die Randbereiche des ersten und des zweiten Kabinenverkleidungselements begrenzten Fläche entspricht. Alternativ dazu kann der Strömungsquerschnitt der Luftabfuhröffnung auch durch strömungsquerschnittsverengende Bauteile begrenzt werden.

Die erfindungsgemäße Dekompressionsanordnung umfasst ferner ein Dekompressionselement, das dazu eingerichtet ist, im Dekompressionsfall, d.h. bei einem Druckabfall in einem im Flugbetrieb unter erhöhtem Druck gehaltenen Bereich der Luftfahrzeugkabine, eine Druckausgleichsöffnung zwischen dem von der Dekompression betroffenen Bereich der Luftfahrzeugkabine und dem zwischen den Kabinenverkleidungselementen und der Luftfahrzeugaußenhaut liegenden Bereich des Luftfahrzeugs freizugeben. Mit anderen Worten, das Dekompressionselement ist dazu eingerichtet, im Dekompressionsfall eine zusätzliche Druckausgleichsöffnung freizugeben, so dass die Abfuhr von Luft aus der Luftfahrzeugkabine nicht länger nur über die Luftabfuhröffnung, sondern sowohl über die Luftabfuhröffnung als auch über die Druckausgleichsöffnung möglich ist. Die erfindungsgemäße Dekompressionsanordnung ermöglicht somit einen raschen Druckausgleich zwischen einem von einer Dekompression betroffenen Bereich der Luftfahrzeugkabine und dem zwischen den Kabinenverkleidungselementen und der Luftfahrzeugaußenhaut liegenden Bereich des Luftfahrzeugs. Dadurch werden im Dekompressionsfall Beschädigungen an der Fußbodenstruktur zuverlässig vermieden.

Bei der erfindungsgemäßen Dekompressionsanordnung ist das Dekompressionselement in einem durch das erste und/oder das zweite Kabinenverkleidungselement von einem Innenraum der Kabine des Luftfahrzeugs abgeschirmten Bereich des Luftfahrzeugs angeordnet. Mit anderen Worten, das Dekompressionselement der erfindungsgemäßen Dekompressionsanordnung ist so positioniert, das es durch das erste und/oder das zweite Kabinenverkleidungselement vor einem unmittelbaren Zugang durch sich in der Luftfahrzeugkabine aufhaltende Passagiere geschützt ist. Durch die Anordnung des Dekompressionselements in einem durch das erste und/oder das zweite Kabinenverkleidungselement vom Innenraum der Luftfahrzeugkabine abgeschirmten Bereich kann das Dekompressionselement zuverlässig vor Missbrauchslasten, wie z.B. Fußtritten oder dergleichen geschützt werden. Dadurch kann das Dekompressionselement weniger robust und folglich leichtgewichtiger ausgelegt werden. Darüber hinaus ist eine einfache Gestaltung des Dekompressionselements möglich, so dass das Dekompressionselement nur wenig fehleranfällig ist und einen lediglich geringen Wartungsaufwand erfordert.

Das erste und/oder das zweite Kabinenverkleidungselement ist/sind vorzugsweise so geformt und angeordnet, dass die für die Passagiere zur Verfügung stehende Kabinenbreite maximiert wird, ohne dass die Luftabfuhr aus der Luftfahrzeugkabine im Normalbertrieb des Luftfahrzeugs oder im Dekompressionsfall beeinträchtigt wird. Mit anderen Worten bei der Formgestaltung und Anordnung des ersten und/oder des zweiten Kabinenverkleidungselements können zunächst die für eine ordnungsgemäße Luftabfuhr aus der Luftfahrzeugkabine im Normalbertrieb des Luftfahrzeugs sowie im Dekompressionsfall erforderlichen Strömungsquerschnittflächen des Strömungskanals definiert werden, durch den die Luftabfuhr aus der Luftfahrzeugkabine erfolgt. In Abhängigkeit dieser Strömungsquerschnittflächen kann/können das erste und/oder das zweite Kabinenverkleidungselement dann so geformt und angeordnet werden, dass die Kabinenbreite maximiert und damit der Komfort für die Passagiere erhöht wird. Insbesondere kann/können das erste und/oder das zweite Kabinenverkleidungselement in einem Abstand von der Luftfahrzeugaußenhaut positioniert werden, der zwar gewährleistet, dass der Strömungskanal für die Luftabfuhr aus der Luftfahrzeugkabine sowohl im Normalbertrieb des Luftfahrzeugs als auch im Dekompressionsfall eine ausreichend große Strömungsquerschnittfläche aufweist, aber nicht größer ist als zur Erfüllung dieser Bedingung unbedingt erforderlich ist.

Ferner kann das zweite Kabinenverkleidungselement, betrachtet aus dem Innenraum der Luftfahrzeugkabine, eine konkav gekrümmte Kontur aufweisen. Eine derartige Gestaltung des zweiten Kabinenverkleidungselements bietet sich z.B. an, wenn die Strömungsquerschnittsfläche eines durch das zweite Kabinenverkleidungselement und die Luftfahrzeugaußenhaut begrenzten Strömungskanalabschnitts in einem bodennahen Bereich durch einen Träger der Flugzeugstruktur verengt wird. Die, betrachtet aus dem Innenraum der Flugzeugkabine, konkav gekrümmte Kontur des zweiten Kabinenverkleidungselements ist dann vorzugsweise so gestaltet, dass der durch das zweite Kabinenverkleidungselement und die Luftfahrzeugaußenhaut begrenzte Strömungskanalabschnitt entlang seiner gesamten Länge im wesentlichen die gleiche Strömungsquerschnittsfläche aufweist.

Dadurch wird sowohl im Normalbertrieb des Luftfahrzeugs als auch im Dekompressionsfall eine ungehinderte Luftabfuhr aus der Luftfahrzeugkabine sichergestellt. Gleichzeitig ermöglicht die Form des zweiten Kabinenverkleidungselements unter Berücksichtung der Ausgestaltung der Flugzeugstruktur eine optimale Ausnutzung des zwischen dem zweiten Kabinenverkleidungselement und der Luftfahrzeugaußenhaut verfügbaren Raums als Strömungskanal für die aus der Flugzeugkabine abzuführende Luft und erlaubt dadurch eine Maximierung der für die Passagiere zur Verfügung stehenden Kabinenbreite.

Alternativ oder zusätzlich dazu kann auch ein Neigungswinkel des zweite Kabinenverkleidungselements relativ zum Boden der Luftfahrzeugkabine so gewählt werden, dass der durch das zweite Kabinenverkleidungselement und die Luftfahrzeugaußenhaut begrenzte Strömungskanalabschnitt entlang seiner gesamten Länge eine gewünschte Strömungsquerschnittsfläche aufweist, die für die Passagiere zur Verfügung stehende Kabinenbreite jedoch gleichzeitg maximiert wird.

Das Dekompressionselement der erfindungsgemäßen Dekompressionsanordnung kann mindestens eine um eine Achse schwenkbare Klappe umfassen, die dazu eingerichtet ist, die Druckausgleichsöffnung zwischen der Kabine des Luftfahrzeugs und dem zwischen den Kabinenverkleidungselementen und der Luftfahrzeugaußeinhaut liegenden Bereich des Luftfahrzeugs freizugeben, wenn ein vorbestimmter Differenzdruck auf das Dekompressionselement wirkt. Ferner kann das Dekompressionselement ein Scharnier oder eine andere geeignete Befestigungsvorrichtung zur schwenkbaren Befestigung der Klappe umfassen.

Falls gewünscht oder erforderlich, kann das Dekompressionselement auch mehrere um eine Achse schwenkbare Klappen umfassen, wobei vorzugsweise jede Klappe dazu eingerichtet ist, eine Druckausgleichsöffnung zwischen der Kabine des Luftfahrzeugs und dem zwischen den Kabinenverkleidungselementen und der Luftfahrzeugaußenhaut liegenden Bereich des Luftfahrzeugs freizugeben, wenn ein vorbestimmter Differenzdruck auf das Dekompressionselement wirkt. Jede Klappe kann mit einem Scharnier oder einer anderen geeigneten Befestigungsvorrichtung schwenkbar befestigt sein. Die Klappen des Dekompressionselements können nebeneinander und/oder untereinander angeordnet sein.

Die Klappe des Dekompressionselements kann, beispielsweise durch eine Feder, in ihre Schließposition vorgespannt sein, in der sie die Drucksausgleichsöffnung zwischen der Kabine des Luftfahrzeugs und dem zwischen den Kabinenverkleidungselementen und der Luftfahrzeugaußenhaut liegenden Bereich des Luftfahrzeugs verschließt. Durch eine geeignete Wahl der Feder bzw. der von der Feder bereitgestellten Federkraft kann dann auf einfache Art und Weise der Differenzdruck eingestellt werden, bei der die Klappe im Dekompressionsfall die Druckausgleichsöffnung zwischen der Kabine des Luftfahrzeugs und dem zwischen den Kabinenverkleidungselementen und der Luftfahrzeugaußenhaut liegenden Bereich des Luftfahrzeugs freigibt.

Alternativ oder zusätzlich dazu kann die Klappe des Dekompressionselements aus einem Material bestehen, das derart elastisch verformbar ist, dass die Druckausgleichsöffnung zwischen der Kabine des Luftfahrzeugs und dem zwischen den Kabinenverkleidungselementen und der Luftfahrzeugaußenhaut liegenden Bereich des Luftfahrzeugs durch die elastische Verformung der Klappe freigegeben wird, wenn ein vorbestimmter Differenzdruck auf das Dekompressionselement wirkt. Mit anderen Worten, durch entsprechende Materialwahl für die Klappe des Dekompressionselements ist es ebenfalls auf einfache Weise möglich, den vorbestimmten Differenzdruck einzustellen, bei der die Klappe des Dekompressionselements im Dekompressionsfall die Druckausgleichsöffnung zwischen der Kabine des Luftfahrzeugs und dem zwischen den Kabinenverkleidungselementen und der Luftfahrzeugaußenhaut liegenden Bereich des Luftfahrzeugs freigibt.

Wenn das Dekompressionselement der erfindungsgemäßen Dekompressionsanordnung mehrere um eine Achse schwenkbare Klappen umfasst, kann jede Klappe durch eine Feder in ihre Schließposition vorgespannt sein, in der sie die ihr zugeordnete Druckausgleichsöffnung zwischen der Kabine des Luftfahrzeugs und dem zwischen den Kabinenverkleidungselementen und der Luftfahrzeugaußenhaut liegenden Bereich des Luftfahrzeugs verschließt. Grundsätzlich kann lediglich eine Feder verwendet werden, um mehrere Klappen des Dekompressionselements in ihre Schließstellung vorzuspannen. Alternativ dazu kann für jede Klappe jedoch auch eine eigene Feder vorgesehen sein. Die den einzelnen Klappen zugeordneten Federn können jeweils die gleiche Federkraft aufweisen. Bei einer derartigen Ausführungsform des Dekompressionselements werden alle Klappen geöffnet, sobald auf das Dekompressionselement ein bestimmter Differenzdruck wirkt. Alternativ dazu können den einzelnen Klappen des Dekompressionselements jedoch auch Federn zugeordnet sein, die jeweils unterschiedliche Federkräfte und folglich Schließkräfte auf die Klappen aufbringen. Die Federn können dann beispielsweise so gewählt sein, dass lediglich eine erste Klappe geöffnet wird, wenn ein erster vorbestimmter Differenzdruck auf das Dekompressionselement wirkt, wohingegen eine zweite Klappe erst dann zusätzlich geöffnet wird, wenn ein größerer zweiter vorbestimmter Differenzdruck auf das Dekompressionselement wirkt.

Alternativ oder zusätzlich dazu können die Klappen eines mehrere Klappen umfassenden Dekompressionselements aus einem Material bestehen, das derart elastisch verformbar ist, dass die Druckausgleichsöffnung zwischen der Kabine des Luftfahrzeugs und dem zwischen den Kabinenverkleidungselementen und der Luftfahrzeugaußenhaut liegenden Bereich des Luftfahrzeugs durch die elastische Verformung der Klappen freigegeben wird, wenn ein vorbestimmter Differenzdruck auf das Dekompressionselement wirkt. Die Klappen können aus dem gleichen Material oder aus verschiedenen Materialien bestehen, die die gleichen elastischen Deformationseigenschaften aufweisen. Bei einer derartigen Anordnung wird gewährleistet, dass alle Klappen des Dekompressionselements geöffnet werden, sobald auf das Dekompressionselement ein vorbestimmter Differenzdruck wirkt. Alternativ dazu ist jedoch auch eine Konfiguration des Deformationselements denkbar, bei dem die Klappen aus unterschiedlichen Materialien bzw. Materialien mit unterschiedlichen elastischen Deformationseigenschaften bestehen. Bei einer derartigen Anordnung kann beispielsweise eine erste Klappe geöffnet werden, wenn auf das Dekompressionselement ein erster Differenzdruck wirkt. Eine zweite Klappe, die aus einem anderen Material bzw. aus einem Material mit anderen elastischen Deformationseigenschaften besteht, kann dagegen erst dann geöffnet werden, wenn auf das Dekompressionselement ein zweiter vorbestimmter Differenzdruck wirkt, der höher ist als der erste vorbestimmte Differenzdruck.

In einer Ausführungsform der erfindungsgemäßen Dekompressionsanordnung ist das Dekompressionselement dazu eingerichtet, im Dekompressionsfall eine Druckausgleichsöffnung freizugeben, die zwischen den Randbereichen der Kabinenverkleidungselemente angeordnet ist. Bei dieser Ausführungsform der erfindungsgemäßen Dekompressionsanordnung erstreckt sich die Druckausgleichsöffnung, die im Dekompressionsfall von dem Dekompressionselement freigegeben wird, somit in einer Ebene mit der Luftabfuhröffnung, durch die im Normalbetrieb des Luftfahrzeugs Abluft aus der Luftfahrzeugkabine in den zwischen den Kabinenverkleidungselementen und der Luftfahrzeugaußenhaut liegenden Bereich des Luftfahrzeugs abgeführt wird. Eine derart gestaltete Dekompressionsanordnung zeichnet sich durch einen besonders einfachen und leichtgewichtigen Aufbau aus, da keine zusätzliche Druckausgleichsöffnung vorgesehen werden muss, sondern im Dekompressionsfall der Druckausgleich zwischen der Luftfahrzeugkabine und dem zwischen den Kabinenverkleidungselementen und der Luftfahrzeugaußenhaut liegenden Bereich des Luftfahrzeugs durch eine "Strömungsquerschnittserweiterung" der Luftabfuhröffnung bewirkt werden kann.

Bei einer derart gestalteten Dekompressionsanordnung ist das Dekompressionselement vorzugsweise auf einer vom Innenraum der Luftfahrzeugkabine abgewandten Seite des ersten Kabinenverkleidungselements mit dem ersten Kabinenverkleidungselement verbunden. Alternativ dazu kann das Dekompressionselement auch auf einer dem Innenraum der Luftfahrzeugkabine zugewandten Seite des zweiten Kabinenverkleidungselements mit dem zweiten Kabinenverkleidungselement verbunden sein. Schließlich kann das Dekompressionselement auch zweiteilig ausgeführt sein, so dass ein erstes Dekompressionselement auf einer vom Innenraum der Luftfahrzeugkabine abgewandten Seite des ersten Kabinenverkleidungselements mit dem ersten Kabinenverkleidungselement und ein zweites Dekompressionselement auf einer dem Innenraum der Luftfahrzeugkabine zugewandten Seite des zweiten Kabinenverkleidungselements mit dem zweiten Kabinenverkleidungselement verbunden sein kann.

Bei einer alternativen Ausführungsform der erfindungsgemäßen Dekompressionsanordnung kann das zweite Kabinenverkleidungselement ein integriertes Gitterelement umfassen, das sich über zumindest einen Teil der Gesamtfläche des zweiten Kabinenverkleidungselements erstreckt. Das zweite Kabinenverkleidungselement ist dann besonders leichtgewichtig gestaltbar.

Das Dekompressionselement ist dann vorzugsweise auf einer vom Innenraum der Luftfahrzeugkabine abgewandten Seite des zweiten Kabinenverkleidungselements mit dem zweiten Kabinenverkleidungselement verbunden und dazu eingerichtet, im Dekompressionsfall eine Mehrzahl von Druckausgleichsöffnungen freizugeben, die durch das in das zweite Kabinenverkleidungselement integrierte Gitterelement definiert werden. Im Dekompressionsfall ist dann die Abfuhr von Luft aus der Luftfahrzeugkabine sowohl durch die Luftabfuhröffnung als auch durch die Druckausgleichsöffnungen möglich, die durch das in das zweite Kabinenverkleidungselement integrierte Gitterelement definiert werden.

Die erfindungsgemäße Dekompressionsanordnung kann ferner einen Schallabsorptionskanal umfassen, der sich bezogen auf die Richtung der Luftströmung durch die Luftabfuhröffnung stromabwärts der Luftabfuhröffnung erstreckt. Durch den Schallabsorptionskanal können Geräusche, die bei der Abfuhr der Luft aus der Luftfahrzeugkabine durch die Luftabfuhröffnung entstehen, wirksam gedämpft werden. Dies wirkt sich vorteilhaft auf den Komfort von sich in der Luftfahrzeugkabine aufhaltenden Personen, wie z. B. Passagieren und Crewmitgliedern aus.

Der Schallabsorptionskanal kann durch einen Abschnitt des ersten Kabinenverkleidungselements sowie ein gegenüber dem Abschnitt des ersten Kabinenverkleidungselements angeordnetes Schallabsorptionskanalelement begrenzt werden. Bei einer derartigen Anordnung ist der Schallabsorptionskanal einbauraumsparend in den zwischen dem ersten Kabinenverkleidungselement und der Flugzeugaußenhaut liegenden Bereich des Luftfahrzeugs integriert.

Das Schallabsorptionskanalelement kann integriert mit dem zweiten Kabinenverkleidungselement ausgebildet sein, d.h. durch einen das erste Kabinenverkleidungselement hintergreifenden Bereich des zweiten Kabinenverkleidungselements gebildet werden. Alternativ dazu kann das Schallabsorptionskanalelement auch als separates Bauteil ausgeführt sein, das jedoch mit dem zweiten Kabinenverkleidungselement verbunden sein kann.

Der Schallabsorptionskanal kann zumindest abschnittsweise mit einem schallabsorbierenden Material, wie z.B. einem schallabsorbierenden Schaummaterial ausgekleidet sein.

Vorzugsweise ist das schallabsorbierende Material auf eine vom Innenraum der Luftfahrzeugkabine abgewandte Oberfläche des ersten Kabinenverkleidungselements aufgebracht. Eine derartige Anordnung ermöglicht eine wirksame Schalldämmung und zeichnet sich gleichzeitig durch ein besonders geringes Gewicht aus.

Schließlich kann die erfindungsgemäße Dekompressionsanordnung ein Strömungssteuerungselement umfassen, das bezogen auf die Richtung der Luftströmung durch die Luftabfuhröffnung stromabwärts der Luftabfuhröffnung angeordnet ist. Das Strömungssteuerungselement kann in einem gewünschten Winkel relativ zur Richtung der Luftströmung durch die Luftabfuhröffnung angeordnet sein, um die Luftströmung wie gewünscht umzulenken. Vorzugsweise erstreckt sich das Strömungssteuerungselement jedoch im wesentlichen senkrecht zur Richtung der Luftströmung durch die Luftabfuhröffnung und ist somit dazu in der Lage, die Luftströmung um ca. 180° in Richtung eines Unterflurbereichs des Luftfahrzeugs umzulenken. Beispielsweise kann das Strömungssteuerungselement bezogen auf die Richtung der Luftströmung durch die Luftabfuhröffnung stromabwärts des Schallabsorptionskanals positioniert und auf einer vom Innenraum der Luftfahrzeugkabine abgewandten, Seite des ersten Kabinenverkleidungselements an dem ersten Kabinenverkleidungselement befestigt sein.

Zwei bevorzugte Ausführungsbeispiele der erfindungsgemäßen Dekompressionsanordnung werden nun anhand der beigefügten schematischen Zeichnungen näher erläutert, von denen
- Figur 1: eine Querschnittsansicht eines ersten Ausführungsbeispiels einer Dekompressionsanordnung für ein Luftfahrzeug im Normalbetrieb des Luftfahrzeugs zeigt,
- Figur 2: die Dekompressionsanordnung gemäß Figur 1 im Dekompressionsfall zeigt,
- Figur 3a: eine Schnittsansicht der Dekompressionsanordnung gemäß Figur 1 in der Ebene E zeigt,
- Figur 3b: eine Schnittsansicht der Dekompressionsanordnung gemäß Figur 1 in der Ebene F zeigt,
- Figur 4: eine Querschnittsansicht eines zweiten Ausführungsbeispiels einer Dekompressionsanordnung für ein Luftfahrzeug im Normalbertrieb des Luftfahrzeugs zeigt,
- Figur 5: eine dreidimensionale Ansicht der Dekompressionsanordnung gemäß Figur 4 zeigt,
- Figur 6: die Dekompressionsanordnung gemäß Figur 4 im Dekompressionsfall zeigt
- Figur 7: die Dekompressionsanordnung gemäß Figur 5 im Dekompressionsfall zeigt,
- Figur 8: eine dreidimensionale Frontansicht einer zum Einsatz in einer Dekompressionsanordnung gemäß den Figuren 4 bis 7 geeignete Anordnung mit einem zweiten Kabinenverkleidungselement und einem Dekompressionselement zeigt, und
- Figur 9: eine dreidimensionale Rückansicht der Anordnung gemäß Figur 8 zeigt.

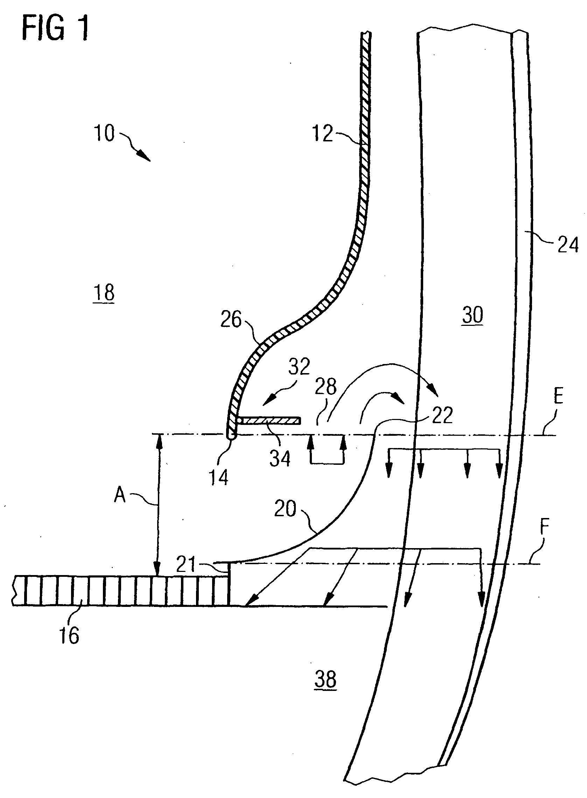

Eine in den Figuren 1,2, 3a und 3b veranschaulichte Dekompressionsanordnung 10 zum Einsatz in einem Luftfahrzeug, insbesondere einem Passagierflugzeug, umfasst ein in Form eines Dado-Paneels ausgebildetes erstes Kabinenverkleidungselement 12. Ein Randbereich 14 des ersten Kabinenverkleidungselements 12 erstreckt sich in einem entlang einer Längsachse des Luftfahrzeugs im Wesentlichen gleichbleibenden Abstand A von einem Boden 16 einer Luftfahrzeugkabine 18. Darüber hinaus umfasst die Dekompressionsanordnung 10 ein in Form eines Bodenbegrenzungselements ausgebildetes zweites Kabinenverkleidungselement 20. Das zweite Kabinenverkleidungselement 20 weist, betrachtet aus dem Innenraum der Luftfahrzeugkabine 18, eine konkav gekrümmte Kontur auf und erstreckt sich vom Boden 16 der Luftfahrzeugkabine 18 in Richtung des ersten Kabinenverkleidungselements 12. Eine dem Innenraum der Luftfahrzeugkabine 18 zugewandte Kante 21 des zweiten Kabinenverkleidungselements 20 dient als Anlagekante für einen auf dem Boden 16 der Luftfahrzeugkabine 18 zu verlegenden Teppich.

In der in den Figuren 1, 2, 3a und 3b gezeigten Ausführungsform der Dekompressionsanordnung 10 liegen ein dem ersten Kabinenverkleidungselement 12 zugewandter Randbereich 22 des zweiten Kabinenverkleidungselements 20 und der Randbereich 14 des ersten Kabinenverkleidungselements 12 in einer gemeinsamen Ebene E. Es ist jedoch auch denkbar, dass das erste und das zweite Kabinenverkleidungselement 12, 20 so angeordnet und/oder geformt sind, dass das zweite Kabinenverkleidungselement 20 das erste Kabinenverkleidungselement 12 hintergreift, so dass der Randbereich 22 des zweiten Kabinenverkleidungselements 20 in einer Ebene liegt, die in einem größeren Abstand von dem Boden 16 der Luftfahrzeugkabine 18 angeordnet ist, als eine Ebene, in der der Randbereich 14 des ersten Verkleidungselements 12 liegt. Schließlich ist es ebenso denkbar, dass das erste und das zweite Kabinenverkleidungselement 12, 20 so geformt und/oder angeordnet sind, dass eine Ebene, in der der Randbereich 22 des zweiten Kabinenverkleidungselements 20 liegt in einem geringeren Abstand von dem Boden 16 der Luftfahrzeugkabine 18 angeordnet ist als eine Ebene, in der der Randbereich 14 des ersten Kabinenverkleidungselements 12 liegt.

Das erste und das zweite Kabinenverkleidungselement 12, 20 erstrecken sich zumindest abschnittsweise im Wesentlichen parallel zu einer Luftfahrzeugaußenhaut 24. Der Randbereich 22 des zweiten Kabinenverkleidungselements 20 ist jedoch in einem geringeren Abstand von der Luftfahrzeugaußenhaut 24 angeordnet als der Randbereich 14 des ersten Kabinenverkleidungselements 12. Bei der in den Figuren 1, 2, 3a und 3b veranschaulichten Dekompressionsanordnung 10 wird dies dadurch realisiert, dass das erste Kabinenverkleidungselement 12 in einem dem zweiten Kabinenverkleidungselement 20 zugewandten Bereich mit einer Ausbuchtung 26 versehen ist.

Zwischen dem Randbereich 14 des ersten Kabinenverkleidungselements 12 und dem Randbereich 22 des zweiten Kabinenverkleidungselements 20 ist eine Luftabfuhröffnung 28 angeordnet, die im Normalbetrieb des Luftfahrzeugs dazu dient, Abluft aus der Luftfahrzeugkabine 18 in einen zwischen den Kabinenverkleidungselementen 12, 20 und der Luftfahrzeugaußenhaut 24 liegenden Bereich 30 des Luftfahrzeugs abzuführen. Wie insbesondere in Figur 1 zu erkennen ist, erstreckt sich die Luftabfuhröffnung 28 jedoch nicht über die gesamte von den Randbereichen 14, 22 der Kabinenverkleidungselemente 12, 20 begrenzte Fläche. Stattdessen nimmt der Strömungsquerschnitt der Luftabfuhröffnung 28 lediglich einen Teilbereich dieser Fläche ein.

Schließlich umfasst die Dekompressionsanordnung 10 ein Dekompressionselement 32. Das Dekompressionselement 32 weist eine aus einem elastisch verformbaren Material, wie z.B. einem Gummimaterial bestehende Klappe 34 auf, die mittels einer nicht näher veranschaulichten Befestigungsvorrichtung auf einer vom Innenraum der Luftfahrzeugkabine 18 abgewandten Seite des ersten Kabinenverkleidungselements 12 an dem ersten Kabinenverkleidungselement 12 befestigt ist. Alternativ dazu wäre es auch denkbar, das Dekompressionselement 32 bzw. die Klappe 34 des Dekompressionselements 32 auf einer dem Innenraum der Luftfahrzeugkabine 18 zugewandten Seite des zweiten Kabinenverkleidungselements 20 an dem zweiten Kabinenverkleidungselement 20 zu befestigen. Schließlich könnte das Dekompressionselement 32 auch zweiteilig ausgeführt sein und eine an dem ersten Kabinenverkleidungselement 12 befestigte erste Klappe sowie eine an dem zweiten Kabinenverkleidungselement 20 befestigte zweite Klappe umfassen.

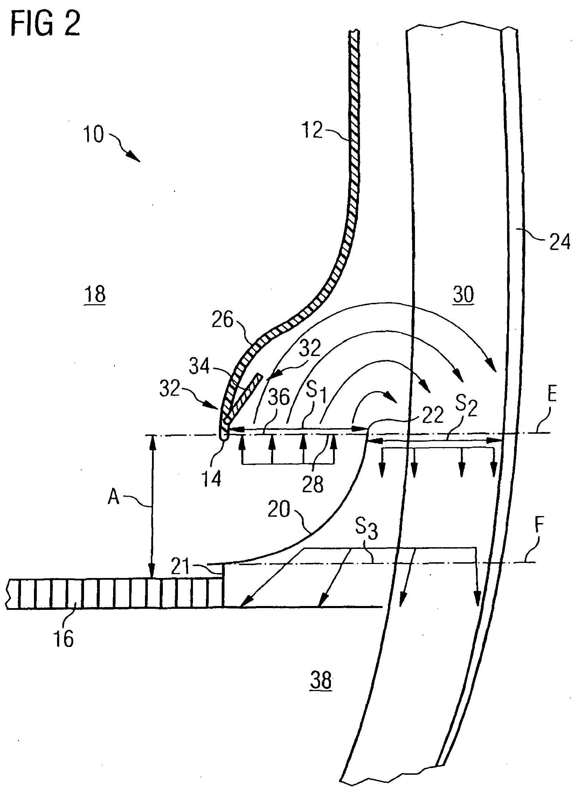

In dem in Figur 1 gezeigten Normalbetrieb des Luftfahrzeugs befindet sich die Klappe 34 des Dekompressionselements 32 in ihrer Schließstellung, so dass die Abfuhr von Luft aus der Luftfahrzeugkabine 18 ausschließlich durch die Luftabfuhröffnung 28 möglich ist. Bei einem Druckabfall in der Luftfahrzeugkabine 18 wirkt jedoch ein Differenzdruck auf das Dekompressionselement 32. Wenn der auf das Dekompressionselement 32 wirkende Differenzdruck einen vorbestimmten Wert überschreitet, der durch die Verformungseigenschaften des zur Herstellung der Klappe 34 des Dekompressionselements 32 verwendeten Materials bestimmt wird, verschwenkt die Klappe 34 des Dekompressionselements 32 dagegen in ihre in Figur 2 gezeigte geöffnete Stellung.

In ihrer geöffneten Stellung gibt die Klappe 34 des Dekompressionselements 32 eine Druckausgleichsöffnung 36 zwischen der Luftfahrzeugkabine 18 und dem zwischen den Kabinenverkleidungselementen 12, 20 und der Luftfahrzeugaußenhaut 24 liegenden Bereich 30 des Luftfahrzeugs frei. Durch die Druckausgleichsöffnung 36, die sich, ebenso wie die Luftabfuhröffnung 28, in der durch die Randbereiche 14, 22 der Kabinenverkleidüngselemente 12, 20 definierten Ebene E zwischen den Randbereichen 14, 22 der Kabinenverkleidungselemente 12, 20 erstreckt, kann im Dekompressionsfall ungehindert Luft aus der Luftfahrzeugkabine 18 in den zwischen den Kabinenverkleidungselementen 12, 20 und der Luftfahrzeugaußenhaut 24 liegenden Bereich 30 des Luftfahrzeugs strömen. Dadurch können Beschädigungen an den Kabinenverkleidungselementen 12, 20 zuverlässig vermieden werden.

Das Dekompressionselement 32 ist, betrachtet aus dem Innenraum der Luftfahrzeugkabine 18, hinter dem ersten Kabinenverkleidungselement 12 und damit in einem Bereich des Luftfahrzeugs angeordnet, der durch das erste Kabinenverkleidungselement 12 vom Innenraum der Luftfahrzeugkabine 18 abgeschirmt wird. Das Dekompressionselement 32 ist somit aus dem Innenraum der Luftfahrzeugkabine 18 nicht unmittelbar zugänglich. Durch diese Anordnung ist das Dekompressionselement 32 gut vor Missbrauchslasten geschützt und kann somit weniger robust und damit leichtgewichtiger gestaltet werden als ein aus dem Innenraum der Luftfahrzeugkabine 18 unmittelbar zugängliches Dekompressionselement.

Im Normalbetrieb des Luftfahrzeugs wird, ebenso wie im Dekompressionsfall, eine über die Luftabfuhröffnung 28 bzw. die Luftabfuhröffnung 28 und die Druckausgleichsöffnung 36 aus der Luftfahrzeugkabine 18 abgeführte Luftströmung, wie durch die Pfeile in den Figuren 1 und 2 angedeutet, um 180° umgelenkt, so dass die Ableitung der Luftströmung in Richtung eines Unterflurbereichs 38 des Luftfahrzeugs möglich ist. Bei der in den Figuren 1 und 2 veranschaulichten Dekompressionsanordnung 10 wirkt die Ausbuchtung 26 des ersten Kabinenverkleidungselements 12 als Strömungslenkungselement zur Umlenkung der über die Luftabfuhröffnung 28 bzw. die Luftabfuhröffnung 28 und die Druckausgleichsöffnung, 36 aus der Luftfahrzeugkabine 18 abgeführte Luftströmung.

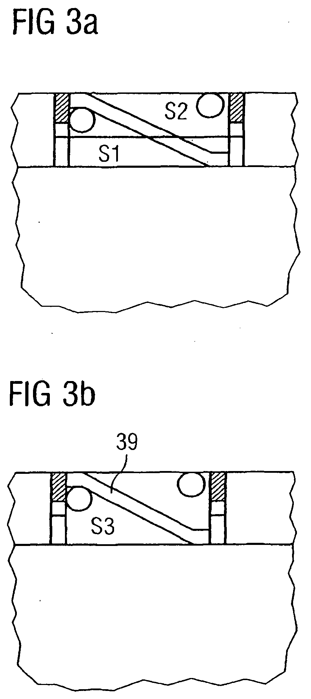

Im Dekompressionsfall wird eine rasche Luftabfuhr aus der Luftfahrzeugkabine 18 und damit ein optimierter Druckausgleich zwischen der Luftfahrzeugkabine 18 und dem zwischen den Kabinenverkleidungselementen 12, 20 und der Luftfahrzeugaußenhaut 24 liegenden Bereich 30 des Luftfahrzeugs dadurch ermöglicht, dass eine Strömungsquerschnittsfläche S1, die durch die Randbereiche 14, 22 der Kabinenverkleidungselemente 12, 20 begrenzt wird, sich also aus der Summe der Strömungsquerschnittsflächen der Luftabfuhröffnung 28 und der Druckausgleichsöffnung 36 zusammensetzt, im Wesentlichen einer Strömungsquerschnittsfläche S2 entspricht, die durch den Randbereich 22 des zweiten Kabinenverkleidungselements 20 und die Luftfahrzeugaußenhaut 24 begrenzt wird. Stromabwärts der Strömungsquerschnittsfläche S2 vergrößert sich aufgrund der konkav gekrümmten Kontur des zweiten Kabinenverkleidungselements 20 der Abstand zwischen dem zweiten Kabinenverkleidungselement 20 und der Luftfahrzeugaußenhaut 24. Wie insbesondere aus den Schnittansichten in den Figuren 3a und 3b deutlich wird, kann dadurch eine durch ein Trägerelement 39 der Flugzeugstruktur eingeschränkte Strömungsquerschnittsfläche S3 so gestaltet werden, dass sie trotz des Trägerelements 39 in etwa den Strömungsquerschnittsflächen S1 und S2 entspricht. Gleichzeitig erlaubt die konkav gekrümmte Kontur des zweiten Kabinenverkleidungselements 20 eine Maximierung der für die Passagiere zur Verfügung stehenden Kabinenbreite.

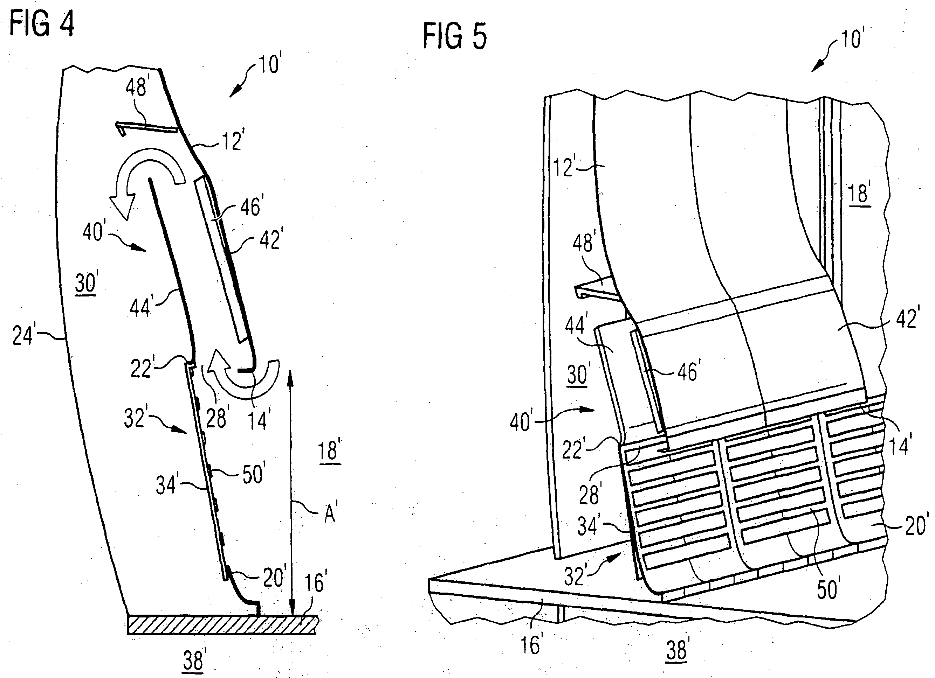

In den Figuren 4 bis 7 ist ein zweites Ausführungsbeispiel einer zum Einsatz in einem Luftfahrzeug vorgesehenen Dekompressionsanordnung 10' veranschaulicht. Ähnlich wie die in den Figuren 1, 2, 3a und 3b veranschaulichte Dekompressionsanordnung 10 umfasst auch die Dekompressionsanordnung 10' gemäß den Figuren 4 bis 7 ein in Form eines Dado-Paneels ausgebildetes erstes Kabinenverkleidungselement 12' mit einem Randbereich 14', der entlang einer Längsachse des Luftfahrzeugs in einem im Wesentlichen gleichbleibenden Abstand A' von einem Boden 16' einer Luftfahrzeugkabine 18' angeordnet ist. Ferner umfasst die Dekompressionsanordnung 10' ein in Form eines Bodenbegrenzungselements ausgebildetes zweites Kabinenverkleidungselement 20'. Ein dem ersten Kabinenverkleidungselement 12' zugewandter Randbereich 22' des zweiten Kabinenverkleidungselements 20' ist in einem geringeren Abstand von einer Flugzeugaußenhaut 24' angeordnet als der Randbereich 14' des ersten Kabinenverkleidungselements 12'.

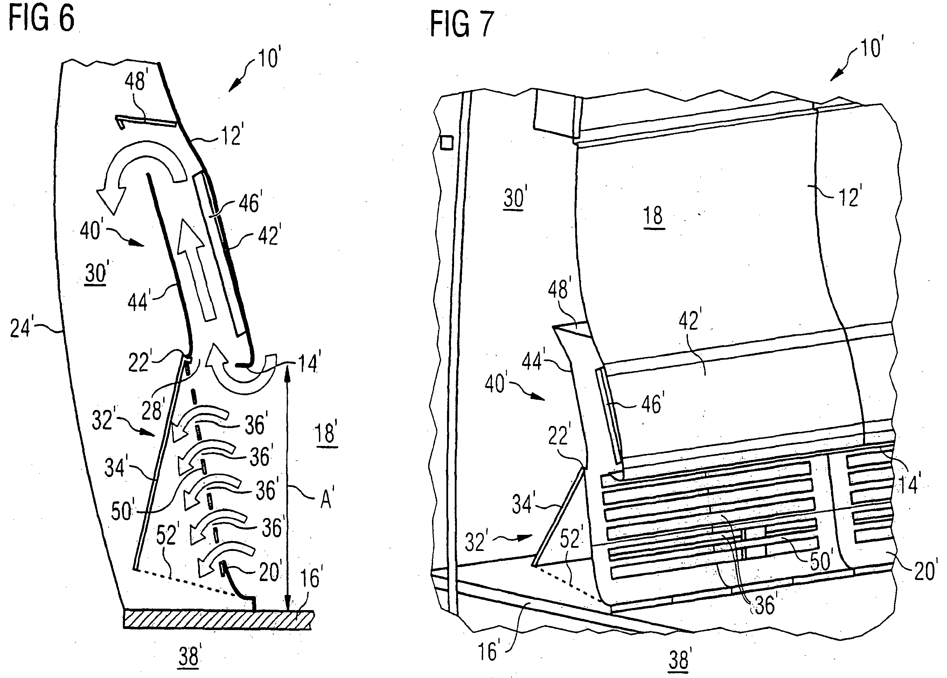

Im Normalbetrieb des Luftfahrzeugs wird über eine Luftabfuhröffnung 28', die zwischen den Randbereichen 14', 22' der Kabinenverkleidungselemente 12', 20' angeordnet ist, Abluft aus der Luftfahrzeugkabine 18' in einen zwischen den Kabinenverkleidungselementen 12', 20' und der Luftfahrzeugaußenhaut 24' liegenden Bereich 30' des Luftfahrzeugs abgeführt. Wie am besten in den Figuren 4 und 6 zu erkennen ist, wird die aus der Luftfahrzeugkabine 18' abgeführte Luft nach ihrem Eintritt in die Luftabfuhröffnung 28' zunächst durch einen Schallabsorptionskanal 40' geleitet, der sich bezogen auf die Richtung der Luftströmung durch die Luftabfuhröffnung 28' stromabwärts der Luftabfuhröffnung 28' erstreckt.

Der Schallabsorptionskanal 40' wird durch einen Abschnitt 42' des ersten Kabinenverkleidungselements 12' sowie ein gegenüber dem Abschnitt 42' des ersten Kabinenverkleidungselements 12' angeordnetes Schallabsorptionskanalelement 44' begrenzt. Das Schallabsorptionskanalelement 44' ist integriert mit dem zweiten Kabinenverkleidungselement 20' ausgebildet, d.h., betrachtet aus der Luftfahrzeugkabine 18', bildet das Schallabsorptionskanalelement 44' einen das erste Kabinenverkleidungselement 12' hintergreifenden Abschnitt des zweiten Kabinenverkleidungselements 20'. Auf einer von der Luftfahrzeugkabine 18' abgewandten Oberfläche des Abschnitts 42' des ersten Kabinenverkleidungselements 12' ist der Schallabsorptionskanal 40' mit einem schallabsorbierenden Material 46', wie z.B. einem Schaummaterial ausgekleidet. Im Normalbetrieb des Luftfahrzeugs sorgt der Schallabsorptionskanal 40' für eine wirksame Dämpfung der bei der Abfuhr von Abluft aus der Luftfahrzeugkabine 18' durch die Luftabfuhröffnung 28' auftretenden Geräusche und somit für eine Erhöhung des Komforts für sich in der Luftfahrzeugkabine 18' aufhaltende Personen.

Nach dem Durchströmen des Schallabsorptionskanals 40' wird die Luftströmung, die über die Luftabfuhröffnung 28' aus der Luftfahrzeugkabine 18' abgeführt wird, um ca. 180° umgelenkt. Zu diesem Zweck ist stromabwärts der Luftabfuhröffnung 28' und des Schallabsorptionskanals 40' ein Strömungssteuerungselement 48' vorgesehen. Das Strömungssteuerungselement 48' ist in Form eines Umlenkblechs ausgebildet und an einer von der Luftfahrzeugkabine 18' abgewandten Oberfläche des ersten Kabinenverkleidungselements 12' befestigt. Um eine ordnungsgemäße Umlenkung der aus dem Schallabsorptionskanal 40' austretenden Luftströmung um ca. 180° zu bewirken, erstreckt sich das Strömungssteuerungselement 48' im wesentlichen senkrecht zur Richtung der Luftströmung durch die Luftabfuhröffnung 28' bzw. den Schallabsorptionskanal 40'. Im Normalbetrieb des Luftfahrzeugs wird die durch das Strömungssteuerungselement 48' umgelenkte Luftströmung zunächst durch den zwischen den Kabinenverkleidungselementen 12', 20' und der Luftfahrzeugaußenhaut 24' liegenden Bereich 30' des Luftfahrzeugs geleitet und von dort schließlich in einen Unterflurbereich 38' des Luftfahrzeugs abgeführt.

Wie am besten in den Figuren 5 und 7 erkennbar ist, umfasst das zweite Kabinenverkleidungselement 20' ein integriertes Gitterelement 50'. Auf einer vom Innenraum der Kabine 18' des Luftfahrzeugs abgewandten Seite des zweiten Kabinenverkleidungselements 20' ist mit dem zweiten Kabinenverkleidungselement 20' ein Dekompressionselement 32' verbunden. Das Dekompressionselement 32' umfasst eine um eine Achse schwenkbare Klappe 34'. Darüber hinaus umfasst das Dekompressionselement 32' ein Scharnier oder eine andere geeignete Befestigungsvorrichtung zur schwenkbaren Befestigung der Klappe 34' an dem zweiten Kabinenverkleidungselement 20'.

Im Normalbetrieb des Luftfahrzeugs wird die Klappe 34' des Dekompressionselements 32' durch die Kraft einer Feder 52' in ihre in den Figuren 3 und 4 veranschaulichte Schließstellung vorgespannt, in der sie abdichtend an dem in das zweite Kabinenverkleidungselement 20' integrierten Gitterelement 50' anliegt. Bei einem Druckabfall in der Luftfahrzeugkabine 18' wird die Klappe 34' des Dekompressionselements 32' dagegen in eine in den Figuren 5 und 6 veranschaulichte Offenstellung verschwenkt, sobald der in Folge des Druckabfalls in der Luftfahrzeugkabine 18' auf das Dekompressionselement 32' wirkende Differenzdruck die von der Feder 52' aufgebrachte Federvorspannkraft überschreitet. Durch entsprechende Gestaltung der Feder 52' kann somit auf einfache Art und Weise der vorbestimmte Differenzdruck eingestellt werden, ab dem die Klappe 34' des Dekompressionselements 32' eine Mehrzahl von Druckausgleichsöffnungen 36' freigibt, die durch das in das zweite Kabinenverkleidungselement 20' integrierte Gitterelement 50' definiert werden.

Im Dekompressionsfall ist somit die Abfuhr von Luft aus der Luftfahrzeugkabine 18' sowohl durch die Luftabfuhröffnung 28' als auch durch die Druckausgleichsöffnungen 36' möglich. Dies ermöglicht einen raschen Druckausgleich zwischen dem Innenraum der Luftfahrzeugkabine 18' und dem zwischen dem zwischen den Kabinenverkleidungselementen 12', 20' und der Luftfahrzeugaußenhaut 24' liegenden Bereich 30' des Luftfahrzeugs. Dadurch werden im Dekompressionsfall Beschädigungen der Fußbodenstruktur zuverlässig vermieden. Die im Dekompressionsfall über die Luftabfuhröffnung 28' sowie die Druckausgleichsöffnungen 36' aus dem Innenraum der Luftfahrzeugkabine 18' abgeführte Luft wird, ähnlich wie im Normalbetrieb des Luftfahrzeugs, schließlich in den Unterflurbereich 38' des Luftfahrzeugs abgeleitet.

Das Dekompressionselement 32' ist, betrachtet aus der Luftfahrzeugkabine 18', hinter dem zweiten Kabinenverkleidungselement 20' und damit in einem Bereich des Luftfahrzeugs angeordnet, der durch das zweite Kabinenverkleidungselement 20' vom Innenraum der Luftfahrzeugkabine 18' und damit einem für die Passagiere zugänglichen Bereich des Luftfahrzeugs abgeschirmt wird. Diese Anordnung gewährleistet, dass das Dekompressionselement 32' gut vor Missbrauslasten geschützt ist. Das Dekompressionselement 32' kann daher weniger robust und damit einfach und leichtgewichtig gestaltet werden. Ferner ermöglicht die Form und Anordnung des zweiten Kabinenverkleidungselements 20' eine Maximierung der für die Passagiere zur Verfügung stehenden Kabinenbreite.

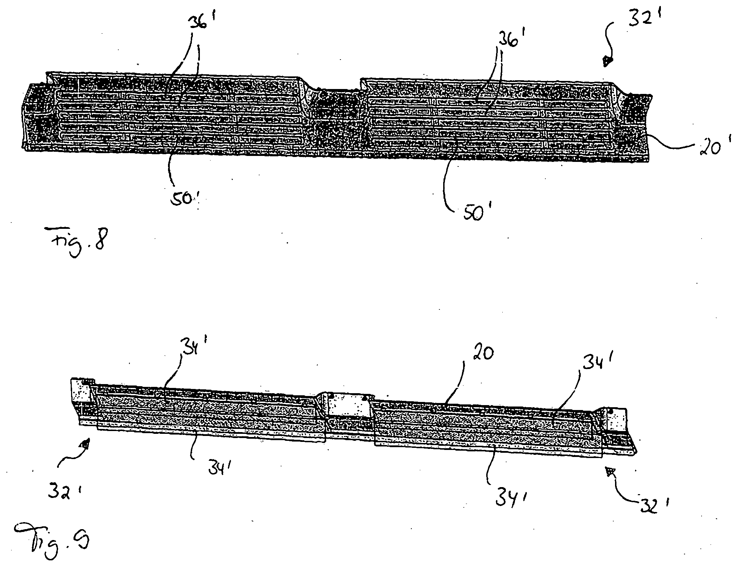

Die Figuren 8 und 9 zeigen eine Anordnung mit einem zweiten Kabinenverkleidungselement 20' und zwei Dekompressionselementen 32', die zum Einsatz in einer Dekompressionsanordnung 10' gemäß den Figuren 4 bis 7 geeignet ist. Bei der in den Figuren 8 und 9 veranschaulichten Anordnung erstreckt sich das zweite Kabinenverkleidungselement 20' im in der Luftfahrzeugkabine 18 montierten Zustand über zwei Spantfelder und umfasst zwei unabhängig voneinander ausgebildete integrierte Gitterelemente 50'. Jedem Gitterelement 50' ist ein Dekompressionselement 32' zugeordnet. Die Dekompressionselemente 32' umfassen jeweils zwei übereinander angeordnete um eine Achse schwenkbare Klappen 34'. Die Klappen 34' sind jeweils in einem Rotationslager gelagert und werden jeweils durch eine Feder in ihre Schließstellung vorgespannt, in der sie abdichtend an den in das zweite Kabinenverkleidungselement 20' integrierten Gitterelementen 50' anliegen. Bei dem in den Figuren 8 und 9 gezeigten Ausführungsbeispiel sind die den Klappen 34' zugeordneten Federn jeweils so gewählt, dass die Klappen 34' in ihre Offenstellung verschwenkt werden und die Druckausgleichsöffnungen 36', die durch die in das zweite Kabinenverkleidungselement 20' integrierten Gitterelemente 50' definiert werden, freigeben, wenn auf die Dekompressionselemente 32' ein vorbestimmter Differenzdruck wirkt. Mit anderen Worten, die Klappen 34' geben alle Druckausgleichsöffnungen 36' gleichzeitig frei, wenn auf die Dekompressionselemente 32' ein vorbestimmter Differenzdruck wirkt.

Alternativ dazu ist es auch möglich, den einzelnen Klappen 34' Federn mit unterschiedlichen Federkräften zuzuordnen, die dann jeweils unterschiedliche Schließkräfte auf die Klappen 34' aufbringen. Die Federn können beispielsweise so dimensioniert sein, dass lediglich eine Klappe 34' oder die beiden oberen Klappen 34' geöffnet werden, wenn ein erster vorbestimmter Differenzdruck auf die Dekompressionselemente 32' wirkt. Die den unteren Klappen 34' zugeordneten Federn können dagegen so dimensioniert sein, dass sie die ihnen zugeordneten Druckausgleichsöffnungen 36' erst dann freigeben, wenn die Dekompressionselemente 32' einem zweiten vörbestimmten Differenzdruck ausgesetzt sind, der höher ist als der erste vorbestimmte Differenzdruck.

Es versteht sich, dass hier lediglich im Zusammenhang mit einer spezifischen Ausführungsform einer Dekompressionsanordnung 10, 10' geschilderten Merkmale auch bei der anderen, hier ebenfalls beschriebenen Ausführungsform einer Dekompressionsanordnung 10, 10' verwirklicht werden können. So kann die in den Figuren 1, 2, 3a und 3b gezeigte Dekompressionsanordnung 10 beispielsweise, ähnlich wie die in den Figuren 4 bis 7 veranschaulichte Dekompressionsanordnung 10', mit einem Schallabsorptionskanal versehen werden. Darüber hinaus ist es denkbar, eine Dekompressionsanordnung mit mehreren Dekompressionselementen zu versehen, wobei ein erstes Dekompressionselement, ähnlich wie das Dekompressionselement der in den Figuren 1, 2, 3a und 3b veranschaulichten Dekompressionsanordnung 10, dazu eingerichtet sein kann, im Dekompressionsfall eine Druckausgleichsöffnung freizugeben, die sich zwischen den Randbereichen der Kabinenverkleidungselemente erstreckt. Ein zweites Dekompressionselement der Dekompressionsanordnung kann dagegen, ähnlich wie das Dekompressionselement der in den Figuren 4 bis 7 veranschaulichten Dekompressionsanordnung 10', dazu eingerichtet sein, im Dekompressionsfall eine Mehrzahl von Druckausgleichsöffnungen freizugeben, die durch ein in ein zweites Kabinenverkleidungselement integriertes Gitterelement definiert werden.

## Patentansprüche

1. Dekompressionsanordnung (10; 10') für ein Luftfahrzeug, welche umfasst:
- ein erstes Kabinenverkleidungselement (12; 12') mit einem Randbereich (14; 14'),
- ein sich vom Boden einer Kabine (18; 18') des Luftfahrzeugs nach oben in Richtung des ersten Kabinenverkleidungselements (12; 12') erstreckendes zweites Kabinenverkleidungselement (20; 20') mit einem Randbereich (22; 22'), und
- ein Dekompressionselement (32; 32'), das dazu eingerichtet ist, im Dekompressionsfall eine Druckausgleichsöffnung (36; 36') zwischen der Kabine (18; 18') des Luftfahrzeugs und dem zwischen den Kabinenverkleidungselementen (12, 20; 12', 20') und der Luftfahrzeugaußenhaut (24; 24') liegenden Bereich (30; 30') des Luftfahrzeugs freizugeben und das in einem durch das erste und/oder das zweite Kabinenverkleidungselement (12, 20; 12', 20') von einem Innenraum der Kabine (18; 18') des Luftfahrzeugs abgeschirmten Bereich des Luftfahrzeugs angeordnet ist,
**dadurch gekennzeichnet, dass** der Randbereich (22; 22') des zweiten Kabinenverkleidungselements (20; 20') in einem geringeren Abstand von einer Luftfahrzeugaußenhaut (24; 24') angeordnet ist als der Randbereich (14; 14') des ersten Kabinenverkleidungselements (12; 12'), so dass von der Kabine (18; 18') aus betrachtet, der Randbereich (22; 22') des zweiten Kabinenverkleidungselements (20; 20') hinter dem Randbereich (14; 14') des ersten Kabinenverkleidungselements (12; 12') positioniert ist
und die Dekompressionsanordnung weiter umfasst:
- eine zwischen dem Randbereich (14; 14') des ersten Kabinenverkleidungselements (12; 12) und dem Randbereich (22; 22') des zweiten Kabinenverkleidungselements (20; 20') angeordnete Luftabfuhröffnung (28; 28') zur Abfuhr von Luft aus einer Kabine (18; 18') des Luftfahrzeugs in einen zwischen den Kabinenverkleidungselementen (12, 20; 12', 20') und der Luftfahrzeugaußenhaut (24; 24') liegenden Bereich (30; 30') des Luftfahrzeugs.

2. Dekompressionsanordnung nach Anspruch 1,
**dadurch gekennzeichnet, dass** das Dekompressionselement (32; 32') mindestens eine um eine Achse schwenkbare Klappe (34; 34') umfasst, die dazu eingerichtet ist, die Druckausgleichsöffnung (36; 36') zwischen der Kabine (18; 18') des Luftfahrzeugs und dem zwischen den Kabinenverkleidungselementen (12, 20; 12', 20') und der Luftfahrzeugaußenhaut (24; 24') liegenden Bereich (30; 30') des Luftfahrzeugs freizugeben, wenn ein vorbestimmter Differenzdruck auf das Dekompressionselement (32; 32') wirkt.

3. Dekompressionsanordnung nach Anspruch 2,
**dadurch gekennzeichnet, dass** die Klappe (34') des Dekompressionselements (32') durch eine Feder (52') in ihre Schließposition vorgespannt wird, in der sie die Druckausgleichsöffnung (36') zwischen der Kabine (18') des Luftfahrzeugs und dem zwischen den Kabinenverkleidungselementen (12', 20') und der Luftfahrzeugaußenhaut (24') liegenden Bereich (30') des Luftfahrzeugs verschließt.

4. Dekompressionsanordnung nach Anspruch 2 oder 3,
**dadurch gekennzeichnet, dass** die Klappe (34) des Dekompressionselements (32) aus einem Material besteht, das derart elastisch verformbar ist, dass die Druckausgleichsöffnung (36) zwischen der Kabine (18) des Luftfahrzeugs und dem zwischen den Kabinenverkleidungselementen (12, 20) und der Luftfahrzeugaußenhaut (24) liegenden Bereich (30) des Luftfahrzeugs durch die elastische Verformung der Klappe (34) freigegeben wird, wenn ein vorbestimmter Differenzdruck auf das Dekompressionselement (32) wirkt.

5. Dekompressionsanordnung nach einem der Ansprüche 1 bis 4,
**dadurch gekennzeichnet, dass** das Dekompressionselement (32) dazu eingerichtet ist, im Dekompressionsfall eine Druckausgleichsöffnung (36) freizugeben, die sich zwischen den Randbereichen (14, 22) der Kabinenverkleidungselemente (12, 20) erstreckt.

6. Dekompressionsanordnung nach einem der Ansprüche 1 bis 5,
**dadurch gekennzeichnet, dass** das Dekompressionselement (32) auf einer vom Innenraum der Kabine (18) des Luftfahrzeugs abgewandten Seite des ersten Kabinenverkleidungselements (12) mit dem ersten Kabinenverkleidungselement (12) oder auf einer dem Innenraum der Kabine (18) des Luftfahrzeugs zugewandten Seite des zweiten Kabinenverkleidungselements (20) mit dem zweiten Kabinenverkleidungselement (20) verbunden ist.

7. Dekompressionsanordnung nach einem der Ansprüche 1 bis 6,
**dadurch gekennzeichnet, dass** das zweite Kabinenverkleidungselement (20') ein integriertes Gitterelement (50') umfasst, das sich über zumindest einen Teil der Gesamtfläche des zweiten Kabinenverkleidungselements (20') erstreckt.

8. Dekompressionsanordnung nach Anspruch 7,
**dadurch gekennzeichnet, dass** das Dekompressionselement (32') auf einer vom Innenraum der Kabine (18') des Luftfahrzeugs abgewandten Seite des zweiten Kabinenverkleidungselements (20') mit dem zweiten Kabinenverkleidungselement (20') verbunden und dazu eingerichtet ist, im Dekompressionsfall eine Mehrzahl von Druckausgleichsöffnungen (36') freizugeben, die durch das in das zweite Kabinenverkleidungselement (20') integrierte Gitterelement (50') definiert werden.

9. Dekompressionsanordnung nach einem der Ansprüche 1 bis 8,
**gekennzeichnet durch** einen Schallabsorptionskanal (40'), der sich bezogen auf die Richtung der Luftströmung **durch** die Luftabfuhröffnung (28') stromabwärts der Luftabfuhröffnung (28') erstreckt.

10. Dekompressionsanordnung nach Anspruch 9,
**dadurch gekennzeichnet, dass** der Schallabsorptionskanal (40') durch einen Abschnitt (42') des ersten Kabinenverkleidungselements (12') sowie ein gegenüber dem Abschnitt (42') des ersten Kabinenverkleidungselements (12') angeordnetes Schallabsorptionskanalelement (44') begrenzt wird.

11. Dekompressionsanordnung nach Anspruch 10,
**dadurch gekennzeichnet, dass** das Schallabsorptionskanalelement (44') integriert mit dem zweiten Kabinenverkleidungselement (20') ausgebildet oder mit dem zweiten Kabinenverkleidungselement (20') verbunden ist.

12. Dekompressionsanordnung nach einem der Ansprüche 9 bis 11,
**dadurch gekennzeichnet, dass** der Schallabsorptionskanal (40') zumindest abschnittsweise mit einem schallabsorbierenden Material (46') ausgekleidet ist.

13. Dekompressionsanordnung nach einem der Ansprüche 1 bis 12,
**gekennzeichnet durch** ein Strömungssteuerungselement (48'), das bezogen auf die Richtung der Luftströmung **durch** die Luftabfuhröffnung (28') stromabwärts der Luftabfuhröffnung (28') angeordnet ist und sich im Wesentlichen senkrecht zur Richtung der Luftströmung **durch** die Luftabfuhröffnung (28') erstreckt.

## Claims

1. Decompression assembly (10; 10') for an aircraft, comprising:
- a first cabin lining element (12; 12') having a boundary area (14; 14'),
- a second cabin lining element (20; 20') extending from the floor of a cabin (18; 18') of the aircraft up in the direction of the first cabin lining element (12; 12') and having a boundary area (22; 22'), and
- a decompression element (32; 32'), which is adapted to release a pressure compensation opening (36; 36') between the cabin (18; 18') of the aircraft and the area (30; 30') of the aircraft located between the cabin lining elements (12, 20; 12', 20') and the aircraft outer skin (24; 24') in the event of decompression and which is disposed in an area of the aircraft that is shielded from an interior of the cabin (18; 18') of the aircraft by the first and/or the second cabin lining element (12, 20; 12', 20'), **characterized in that** the boundary area (22; 22') of the second cabin lining element (20; 20') is disposed at a smaller distance from an aircraft outer skin (24; 24') than the boundary area (14; 14') of the first cabin lining element (12; 12') so that, viewed from the cabin (18; 18'), the boundary area (22; 22') of the second cabin lining element (20; 20') is positioned behind the boundary area (14; 14') of the first cabin lining element (12; 12'),
and **in that** the decompression assembly further comprises:
- an air discharge opening (28; 28') disposed between the boundary area (14; 14') of the first cabin lining element (12; 12') and the boundary area (22; 22') of the second cabin lining element (20; 20') for discharging air from a cabin (18; 18') of the aircraft into an area (30; 30') of the aircraft located between the cabin lining elements (12, 20; 12', 20') and the aircraft outer skin (24; 24').

2. Decompression assembly according to claim 1,
**characterized in that** the decompression element (32; 32') comprises at least one flap (34; 34'), which is pivotable about an axis and is adapted to release the pressure compensation opening (36; 36') between the cabin (18; 18') of the aircraft and the area (30; 30') of the aircraft located between the cabin lining elements (12, 20; 12', 20') and the aircraft outer skin (24; 24') when a predetermined differential pressure acts upon the decompression element (32; 32').

3. Decompression assembly according to claim 2,
**characterized in that** the flap (34') of the decompression element (32') is biased by means of a spring (52') into its closed position, in which it closes the pressure compensation opening (36') between the cabin (18') of the aircraft and the area (30') of the aircraft located between the cabin lining elements (12', 20') and the aircraft outer skin (24').

4. Decompression assembly according to claim 2 or 3,
**characterized in that** the flap (34) of the decompression element (32) is made of a material that is elastically deformable in such a way that the pressure compensation opening (36) between the cabin (18) of the aircraft and the area (30) of the aircraft located between the cabin lining elements (12, 20) and the aircraft outer skin (24) is released by means of the elastic deformation of the flap (34) when a predetermined differential pressure acts upon the decompression element (32).

5. Decompression assembly according to one of claims 1 to 4,
**characterized in that** the decompression element (32) is adapted to release a pressure compensation opening (36) that extends between the boundary areas (14, 22) of the cabin lining elements (12, 20) in the event of decompression.

6. Decompression assembly according to one of claims 1 to 5,
**characterized in that** the decompression element (32) is connected to the first cabin lining element (12) at a side of the first cabin lining element (12) facing away from the interior of the cabin (18) of the aircraft or is connected to the second cabin lining element (20) at a side of the second cabin lining element (20) facing towards the interior of the cabin (18) of the aircraft.

7. Decompression assembly according to one of claims 1 to 6,
**characterized in that** the second cabin lining element (20') comprises an integrated screen element (50') that extends over at least part of the total area of the second cabin lining element (20').

8. Decompression assembly according to claim 7,
**characterized in that** the decompression element (32') is connected to the second cabin lining element (20') at a side of the second cabin lining element (20') facing away from the interior of the cabin (18') of the aircraft and is adapted to release a plurality of pressure compensation openings (36'), which are defined by the screen element (50') integrated into the second cabin lining element (20') in the event of decompression.

9. Decompression assembly according to one of claims 1 to 8,
**characterized by** a sound absorption duct (40') that extends, in relation to the direction of the flow of air through the air discharge opening (28'), downstream of the air discharge opening (28').

10. Decompression assembly according to claim 9,
**characterized in that** the sound absorption duct (40') is delimited by a portion (42') of the first cabin lining element (12') and by a sound absorption duct element (44') that is disposed opposite the portion (42') of the first cabin lining element (12').

11. Decompression assembly according to claim 10,
**characterized in that** the sound absorption duct element (44') is configured so as to be integrated with the second cabin lining element (20') or is connected to the second cabin lining element (20').

12. Decompression assembly according to one of claims 9 to 11,
**characterized in that** the sound absorption duct (40') is at least in sections lined with a sound-absorbing material (46').

13. Decompression assembly according to one of claims 1 to 12,
**characterized by** a flow control element (48') that is disposed, in relation to the direction of the flow of air through the air discharge opening (28'), downstream of the air discharge opening (28') and extends substantially at right angles to the direction of the flow of air through the air discharge opening (28').

## Revendications

1. Dispositif de décompression (10 ; 10') pour un aéronef, lequel comprend :
- un premier élément d'habillage de cabine (12 ; 12') comportant une zone de bord (14 ; 14'),
- un deuxième élément d'habillage de cabine (20 ; 20') s'étendant vers le haut en direction du premier élément d'habillage de cabine (12 ; 12') depuis le sol d'une cabine (18 ; 18') de l'aéronef, comportant une zone de bord (22 ; 22'), et
- un élément de décompression (32 ; 32') qui est agencé pour libérer, en cas de décompression, une ouverture d'égalisation de pression (36 ; 36') entre la cabine (18 ; 18') de l'aéronef et la zone (30 ; 30') de l'aéronef située entre les éléments d'habillage de cabine (12, 20 ; 12', 20') et une enveloppe d'aéronef (24 ; 24') et qui est disposé dans une zone de l'aéronef isolée d'un espace intérieur de la cabine (18; 18') de l'aéronef par le premier et/ou le deuxième élément d'habillage de cabine (12, 20 ; 12', 20'),
**caractérisé en ce que** la zone de bord (22 ; 22') du deuxième élément d'habillage de cabine (20 ; 20') est disposée à une plus faible distance de l'enveloppe d'aéronef (24 ; 24') que la zone de bord (14 ; 14') du premier élément d'habillage de cabine (12 ; 12'), de sorte que, vue de la cabine (18 ; 18'), la zone de bord (22 ; 22') du deuxième élément d'habillage de cabine (20 ; 20') est positionnée derrière la zone de bord (14 ; 14') du premier élément d'habillage de cabine (12 ; 12'),
et **en ce que** le dispositif de décompression comprend en outre:
- une ouverture d'évacuation d'air (28 ; 28') disposée entre la zone de bord (14 ; 14') du premier élément d'habillage de cabine (12 ; 12') et la zone de bord (22 ; 22') du deuxième élément d'habillage de cabine (20 ; 20') pour évacuer l'air d'une cabine (18 ; 18') de l'aéronef dans une zone (30 ; 30') de l'aéronef située entre les éléments d'habillage de cabine (12, 20 ; 12', 20') et l'enveloppe d'aéronef (24; 24').

2. Dispositif de décompression selon la revendication 1,
**caractérisé en ce que** l'élément de décompression (32 ; 32') comprend au moins un volet (34 ; 34') pivotant autour d'un axe, qui est conçu pour libérer l'ouverture d'égalisation de pression (36 ; 36') entre la cabine (18 ; 18') de l'aéronef et la zone (30 ; 30') de l'aéronef située entre les éléments d'habillage de cabine (12, 20 ; 12', 20') et l'enveloppe d'aéronef (24 ; 24') lorsqu'une pression différentielle prédéterminée agit sur l'élément de décompression (32 ; 32').

3. Dispositif de décompression selon la revendication 2,
**caractérisé en ce que** le volet (34') de l'élément de décompression (32') est précontraint par un ressort (52') dans sa position de fermeture dans laquelle il ferme l'ouverture d'égalisation de pression (36') entre la cabine (18') de l'aéronef et la zone (30') de l'aéronef située entre les éléments d'habillage de cabine (12', 20') et l'enveloppe d'aéronef (24').

4. Dispositif de décompression selon la revendication 2 ou la revendication 3,
**caractérisé en ce que** le volet (34) de l'élément de décompression (32) est réalisé dans un matériau qui est déformable élastiquement de façon que l'ouverture d'égalisation de pression (36) entre la cabine (18) de l'aéronef et la zone (30) de l'aéronef située entre les éléments d'habillage de cabine (12, 20) et l'enveloppe d'aéronef (24) soit libérée grâce à la déformation élastique du volet (34) lorsqu'une pression différentielle prédéterminée agit sur l'élément de décompression (32).

5. Dispositif de décompression selon l'une des revendications 1 à 4,
**caractérisé en ce que** l'élément de décompression (32) est agencé pour libérer, en cas de décompression, une ouverture d'égalisation de pression (36) qui s'étend entre les zones de bord (14, 22) des éléments d'habillage de cabine (12, 20).

6. Dispositif de décompression selon l'une des revendications 1 à 5,
**caractérisé en ce que** l'élément de décompression (32) est relié au premier élément d'habillage de cabine (12) d'un côté du premier élément d'habillage de cabine (12) opposé à l'espace intérieur de la cabine (18) de l'aéronef, ou est relié au deuxième élément d'habillage de cabine (20) d'un côté du deuxième élément d'habillage de cabine (20) en regard de l'espace intérieur de la cabine (18) de l'aéronef.

7. Dispositif de décompression selon l'une des revendications 1 à 6,
**caractérisé en ce que** le deuxième élément d'habillage de cabine (20') comprend un élément de grille (50') intégré qui s'étend sur au moins une partie de la surface totale du deuxième élément d'habillage de cabine (20').

8. Dispositif de décompression selon la revendication 7,
**caractérisé en ce que** l'élément de décompression (32') est relié au deuxième élément d'habillage de cabine (20') d'un côté du deuxième élément d'habillage de cabine (20') opposé à l'espace intérieur de la cabine (18') de l'aéronef et est agencé pour libérer, en cas de décompression, une pluralité d'ouvertures d'égalisation de pression (36') qui sont définies par l'élément de grille (50') intégré dans le deuxième élément d'habillage de cabine (20').

9. Dispositif de décompression selon l'une des revendications 1 à 8,
**caractérisé par** un canal d'absorption acoustique (40') qui s'étend en aval de l'ouverture d'évacuation d'air (28') par rapport au sens de l'écoulement d'air à travers l'ouverture d'évacuation d'air (28').

10. Dispositif de décompression selon la revendication 9,
**caractérisé en ce que** le canal d'absorption acoustique (40') est limité par une section (42') du premier élément d'habillage de cabine (12') ainsi que par un élément de canal d'absorption acoustique (44') disposé en face de la section (42') du premier élément d'habillage de cabine (12').

11. Dispositif de décompression selon la revendication 10,
**caractérisé en ce que** l'élément de canal d'absorption acoustique (44') est agencé intégré au deuxième élément d'habillage de cabine (20') ou est relié au deuxième élément d'habillage de cabine (20').

12. Dispositif de décompression selon l'une des revendications 9 à 11,
**caractérisé en ce que** le canal d'absorption acoustique (40') est revêtu au moins par endroits d'un matériau (46') absorbant les sons.

13. Dispositif de décompression selon l'une des revendications 1 à 12,
**caractérisé par** un élément de commande d'écoulement (48') qui est disposé en aval de l'ouverture d'évacuation d'air (28') par rapport au sens de l'écoulement d'air à travers l'ouverture d'évacuation d'air (28') et qui s'étend sensiblement perpendiculairement au sens de l'écoulement d'air à travers l'ouverture d'évacuation d'air (28').
